(19) Europäisches Patentamt
European Patent Office
Office européen des brevets

(11) **EP 4 032 725 B1**

(12) **EUROPEAN PATENT SPECIFICATION**

(45) Date of publication and mention
of the grant of the patent:
**05.03.2025 Bulletin 2025/10**

(21) Application number: **22153382.1**

(22) Date of filing: **26.01.2022**

(51) International Patent Classification (IPC):
**B60C 9/06** *(2006.01)*        **B60C 9/07** *(2006.01)*

(52) Cooperative Patent Classification (CPC):
**B60C 9/06; B60C 9/07;** B60C 2200/10

(54) **MOTORCYCLE TYRE**

MOTORRADREIFEN

PNEUMATIQUE DE MOTOCYCLETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2021 JP 2021010530**

(43) Date of publication of application:
**27.07.2022 Bulletin 2022/30**

(73) Proprietor: **Sumitomo Rubber Industries, Ltd.
Kobe-shi, Hyogo-ken 651-0072 (JP)**

(72) Inventor: **KOBORI, Chihiro
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**CN-A- 1 652 950          GB-A- 1 423 669
IT-A1- MI 961 614          JP-B2- 3 694 152
US-A1- 2020 331 298**

**Description**

RELATED APPLICATIONS

This application claims the benefit of foreign priority to Japanese Patent Application No. JP2021-010530, filed January 26, 2021.

FIELD OF THE INVENTION

The present invention relates to a motorcycle tyre.

BACKGROUND OF THE INVENTION

The Patent document 1 below discloses a motorcycle bias tyre. The tyre includes a bias carcass having carcass cords which are inclined with respect to the tyre circumferential direction and a band layer disposed on the carcass in the tread portion. The tyre has been expected to reduce the tyre weight and improve steering stability by the carcass ply and the band layer.

[Patent document]

[Patent document 1] Japanese Unexamined Patent Application Publication 2000-185511
A motorcycle tyre in accordance with the preamble of claim 1 is known from GB 1 423 669 A. Related tyres are known from CN 1 652 950 A, US 2020/331298 A1 and IT MI 961 614 A1.

SUMMARY OF THE INVENTION

Motorcycle tyres including the carcass with a bias structure as described above tend to have a small camber thrust when turning at a relatively large camber angle. Thus, improvement in turning performance has been required.
The present invention has been made in view of the above circumstances and has a major object to provide a motorcycle tyre having a bias carcass capable of exhibiting superior turning performance. The object is achieved by a motorcycle tyre having the features of claim 1. Sub-claims are directed to preferable embodiments.
In one aspect of the present invention, a motorcycle tyre includes a tread portion between a pair of tread edges, a pair of sidewall portions, a pair of bead portions, and a carcass having a bias structure and extending between the pair of bead portions. The tread portion, when a tread development width between the pair of tread edges of the tread portion is equally divided into five regions, includes a central crown region, a pair of shoulder regions including the pair of tread edges and a pair of middle regions located between the crown region and each of the shoulder regions. The carcass includes a plurality of carcass cords, and an angle $\theta s$ with respect to a tyre circumferential direction of at least one of the plurality of carcass cords in the shoulder regions is greater than an angle $\theta c$ with respect to the tyre circumferential direction of at least one of the plurality of carcass cords in the crown region. The tread portion is provided with a band layer extending in the crown region, the pair of middle regions and the pair of shoulder regions, wherein the band layer comprises a band ply having band cords oriented at an angle equal to or less than 5 degrees with respect to the tyre circumferential direction, and ends Em of the band cords in the middle regions is greater than ends Ec of the band cords in the crown region. Ends Es of the band cords of the band ply in each of the pair of shoulder regions are smaller than the ends Em.
According to a preferable embodiment of the present invention, in the crown region, the pair of middle regions and the pair of shoulder regions, an angle with respect to the tyre circumferential direction of the plurality of carcass cords is in a range of 20 to 65 degrees.
According to a preferable embodiment of the present invention, the angle $\theta c$ is in a range of 0.35 to 0.90 times of the angle $\theta s$.
According to a preferable embodiment of the present invention, the ends Ec are in a range of from 0.50 to 0.90 times of the ends Em.
According to a preferable embodiment of the present invention, the ends Es are in a range of from 0.50 to 0.90 times of the ends Em.
According to a preferable embodiment of the present invention, a value $\theta c*Ec/Em$ obtained by multiplying the angle $\theta c$ by a ratio of the ends Ec to the ends Em is in a range of 10 to 55.
According to a preferable embodiment of the present invention, a value $\theta s*Es/Em$ obtained by multiplying the angle $\theta s$ by a ratio of ends Es of the band cords of the band ply in each of the pair of shoulder regions to the ends Em is in a range of 10 to 55.
According to a preferable embodiment of the present invention, the band ply comprises a jointless band ply having the band cords wound spirally.

BRIEF DESCRIPTION OF THE DRAWINGS

FIG. 1 is a cross-sectional view of a motorcycle tyre in accordance with an embodiment of the present invention;
FIG. 2 is a development view of a first carcass ply and a second carcass ply;
FIG. 3 is a development view of the first carcass ply; and
FIG. 4 is a development view of a band ply of FIG. 1.

DETAILED DESCRIPTRION OF THE INVENTION

Hereinafter, an embodiment of the present invention will be described with reference to the drawings.

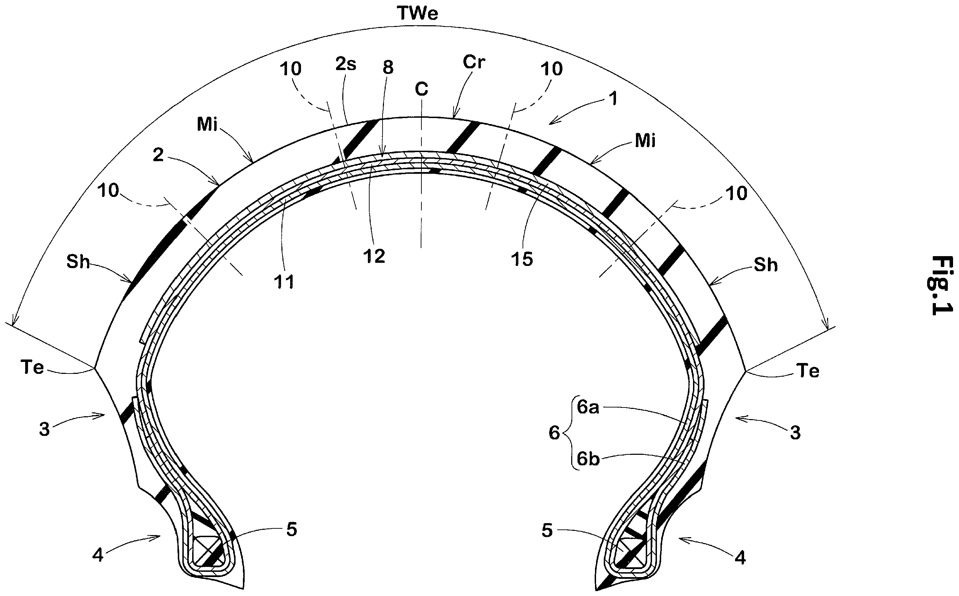

FIG. 1 is a cross-sectional view including the tyre axis of a motorcycle tyre 1 (hereafter, simply referred to as "tyre") under a normal state in accordance with an embodiment of the present invention. The tyre 1 according to the present embodiment is a tyre for front wheel of motorcycle suitable for on-road sport driving. However, the tyre according to the present invention is not limited to a tyre for a front wheel of a motorcycle for on-road sport driving.

As used herein, when a motorcycle tyre is based on a standard, "normal state" is such that the tyre 1 is mounted onto a standard wheel rim with a standard pressure but loaded with no tyre load. As used herein, when a motorcycle tyre is not based on any standards, "normal state" means a standard usage state according to the purpose of use of the tyre, where the tyre is not mounted to a vehicle and loaded with no tyre load. As used herein, unless otherwise noted, dimensions of portions of the tyre 1 are values measured under the normal state.

As used herein, the "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As illustrated in FIG. 1, the tyre 1 according to the present embodiment includes a tread portion 2 between a pair of tread edges Te, a pair of sidewall portions 3, and a pair of bead portions 4. The tread portion 2 includes an outer surface 2s between the pair of tread edges Te. The outer surface 2s is curved in an arc-shaped manner protruding outwardly in the tyre radial direction so that a sufficient grounding area can be maintained even when turning with a large camber angle. Note that the pair of tread edges Te corresponds to the axially both edges of the ground contacting surface of the tread portion 2 when turning at the maximum camber angle.

The tread portion 2 includes a crown region Cr, a pair of shoulder regions Sh and a pair of middle regions Mi. The crown region Cr is the central region when the tread development width TWe between the pair of tread ends Te is equally divided into five regions in the tyre axial direction. The pair of shoulder regions Sh includes the pair of tread edges Te, and is the pair of regions on both sides of the tread portion 2 in the tyre axial direction when equally divided into the five regions. The pair of middle regions Mi is located between the crown region Cr and each of the shoulder regions Sh. The boundaries 10 of the regions extend so as to divide the tread development width TWe into five regions equally when the tread portion 2 is developed in a plane. On the other hand, in the tyre meridian cross-sectional view, the boundaries 10 extend in the normal direction of the tread portion 2 with respect to the outer surface 2s.

In addition, the tyre 1 according to the present embodiment includes a toroidal carcass 6. The carcass 6 extends between the pair of bead portions 4 through the pair of sidewall portions 3 and the tread portion 2. The carcass 6 includes at least one carcass ply having a plurality of carcass cords coated with a topping rubber. The carcass 6 according to the present invention has a bias structure in which the carcass cords are obliquely with respect to the tyre circumferential direction. The carcass cords, for example, are made of an organic fiber cord.

The carcass 6 according to the present embodiment, for example, includes a first carcass ply 11 and a second carcass ply 12 which are superimposed with each other. In the present embodiment, the first carcass ply 11 is located inwardly in the tyre radial direction with respect to the second carcass ply 12 in the tread portion 2. In addition, the carcass 6 according to the present embodiment includes a main portion 6a and a pair of turn-up portions 6b. The main portion 6a extends between a pair of bead cores 5 of the pair of bead portions 4, through the tread portion 2 and the sidewall portions 3. Each of the turn-up portions 6b is connected to the main portion 6a and is turned up around a respective one of the bead cores 5 so as to extend outwardly in the tyre radial direction.

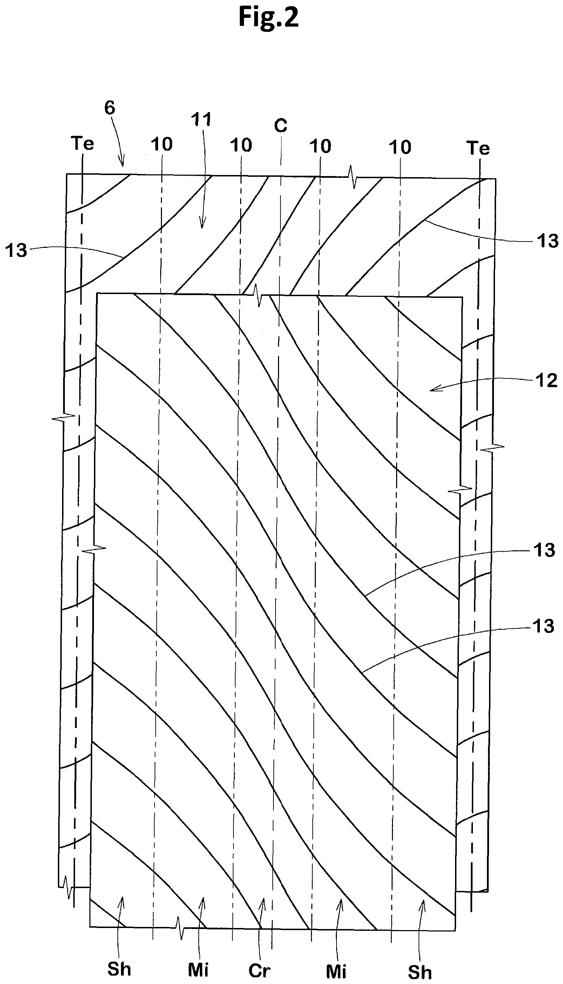

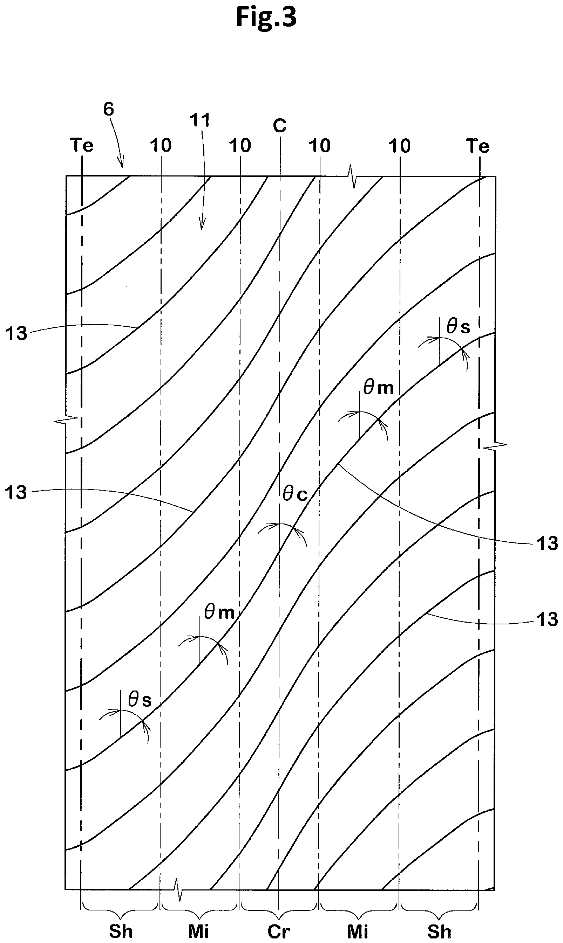

FIG. 2 illustrates a development view of the first carcass ply 11 and the second carcass ply 12, and FIG. 3 illustrates a development view of the first carcass ply 11 to show an arrangement of the carcass cords 13. As illustrated in FIGS. 2 and 3, in the present embodiment, the carcass cords 13 of the first carcass ply 11 are inclined in the first direction (upward to the right in each Figure of the embodiment) with respect to the tyre axial direction, and the carcass cords 13 of the second carcass ply 12 are inclined in the second direction opposite to the first direction (downward to the right in each Figure of the embodiment) with respect to the tyre axial direction. Thus, the first carcass ply 11 and the second carcass ply 12 are superimposed such that the carcass cords 13 cross with each other.

As illustrated in FIG. 3, an angle θs with respect to the tyre circumferential direction of at least one of the plurality of carcass cords 13 in the shoulder regions Sh is greater than an angle θc with respect to the tyre circumferential direction of at least one of the plurality of carcass cords 13 in the crown region Cr. By adopting the above configuration, the tyre 1 according to the present invention can exhibit excellent turning performance. The reason for this is considered to be the following mechanism.

The arrangement of the above-mentioned the carcass cords 13 can enhance rigidity in the tyre axial direction of the shoulder regions Sh. Thus, in a process of grounding from the crown region Cr to either one of the shoulder regions Sh when turning, the camber thrust and cornering force can increase gradually and when either one of the shoulder regions Sh comes into contact with the ground, a sufficiently large camber thrust and cornering force can be obtained. On the other hand, the above-mentioned small angle of the carcass cords in the crown region Cr can enhance rigidity in the tyre circumferential direction of the crown region Cr, maintaining braking performance. In the present invention, it is considered that excellent turning performance can be exhibited by the above mechanism.

Hereinafter, a more detailed configuration of the present embodiment will be described. Note that each configuration described below shows a specific aspect of the present embodiment. Thus, the present invention can exert the above-mentioned effects even if the tyre does not include the configuration described below. Further, if any one of the configurations described below is applied independently to the tyre of the present invention having the above-mentioned characteristics, the performance improvement according to each additional configuration can be expected. Furthermore, when some of the configurations described below are applied in combination, it is expected that the performance of the additional configurations will be improved.

As illustrated in FIG. 3, in the crown region Cr, the middle regions Mi and the shoulder regions Sh, an angle with respect to the tyre circumferential direction of the carcass cords 13 is preferably in a range of from 20 to 65 degrees.

In the crown region Cr, an angle θc with respect to the tyre circumferential direction of the carcass cords 13, for example, is in a range of from 20 to 45 degrees, preferably 25 to 40 degrees. In addition, in the middle regions Mi, an angle θm with respect to the tyre circumferential direction of the carcass cords 13, for example, is in a range of 25 to 60 degrees, preferably 30 to 55 degrees. In the shoulder regions Sh, an angle θs with respect to the tyre circumferential direction of the carcass cords 13, for example, is in a range of 25 to 65 degrees, preferably 35 to 60 degrees. Note that the present invention is not limited to such angles.

Preferably, the angles with respect to the tyre circumferential direction of the carcass cords 13 in the respective regions satisfy the relation of the following equation (1).

$$\theta c < \theta m < \theta s \quad \text{--- (1)}$$

In addition, it is preferable that an angle of the carcass cords 13 increases continuously from the crown region Cr side toward each shoulder region Sh side. As a result, the response when a motorcycle body is leaned becomes linear, and handling performance can be improved.

The angle θc of the carcass cords 13 in the crown region Cr is preferably equal to or more than 0.35 times of the angle θs of the carcass cords 13 in the shoulder regions Sh, more preferably equal to or more than 0.50 times, but preferably equal to or less than 0.90 times, more preferably equal to or less than 0.75 times. Such an arrangement of the carcass cords 13 can improve turning performance of the tyre while preventing the leaning response from becoming heavy.

The angle θm of the carcass cords 13 in the middle regions Mi is preferably equal to or more than 0.75 times of the angle θs of the carcass cords 13 in the shoulder regions Sh, more preferably equal to or more than 0.80 times, but preferably equal to or less than 0.98 times, more preferably equal to or less than 0.95 times. Such an arrangement of the carcass cords 13 can provide excellent handling performance when turning at a relatively large camber angle where one of the middle regions Mi and the shoulder region Sh adjacent thereto come into contact with the ground.

Note that the arrangements of the carcass cords 13 described above are applied not only to the carcass cords 13 of the first carcass ply 11 shown in FIG. 3 but also to the carcass cords of the second carcass ply 12. Further, the angles of the carcass cords 13 in the above respective regions correspond to angles which are measured at the center position in the tyre axial direction of the respective regions.

As illustrated in FIG. 1, the tread portion 2 according to the present embodiment further includes a band layer 8 extending in the crown region Cr, the pair of middle regions Mi and the pair of shoulder regions Sh. The band layer 8 includes a band ply 15 having band cords oriented at an angle equal to or less than 5 degrees with respect to the tyre circumferential direction. In some more preferred embodiment, the band ply 15 according to the present embodiment is configured as a jointless band ply that has one or more band cord wound spirally.

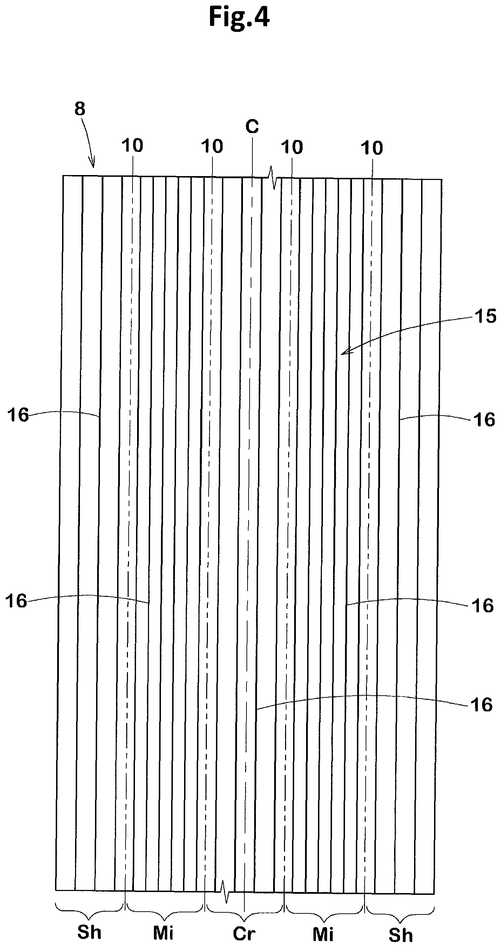

FIG. 4 is a development view of the band ply 15. In the present embodiment, ends of the band cords 16 of the band ply 15 (the number of cords arranged per 5 cm of the ply width in a tyre cross-sectional view) are different for each region. This is expected to improve various performances.

Specifically, ends Ec of the band cords in the crown region Cr, for example, are in a range of from 10 to 40, preferably 20 to 35. Ends Em of the band cords in each middle region Mi, for example, are in a range of from 20 to 60, preferably 30 to 55. Ends Es of the band cords in each shoulder region Sh, for example, are in a range of from 5 to 40, preferably 10 to 35.

The ends Em of the band cords 16 in each middle region Mi are greater than the ends Ec of the band cords 16 in the crown region Cr. Specifically, the ends Ec in the crown region Cr are preferably equal to or more than 0.50 times the ends Em in the middle regions Mi, more preferably equal to or more than 0.60 times, but preferably equal to or less than 0.90 times, more preferably equal to or less than 0.80 times.

The ends Es of the band cords 16 in each shoulder regions Sh are smaller than the ends Em of the band cords 16 in each middle region Mi. Specifically, the ends Es in each shoulder region Sh are preferably equal to or more than 0.50 times the ends Em in the middle regions Mi, more preferably equal to or more than 0.60 times, but preferably equal to or less than 0.90 times, more preferably equal to or less than 0.80 times. Such an arrangement of the band cords 16 can relatively relax rigidity in the tyre circumferential direction of the shoulder regions Sh and increase an area of the contact patch of the shoulder regions Sh, so that grip performance of the tyre during turning can be improved.

As a result of various experiments, the inventor has found that the overall performance of the tyre, such as the response when leaning a motorcycle, steering stability and turning performance can be improved by associating an angle of the carcass cords 13 with respect to the ends of the band cords 16.

Specifically, a value $\theta c * Ec/Em$ obtained by multiplying the angle $\theta c$ (shown in FIG. 3) of the carcass cords 13 in the crown region Cr by a ratio of the ends Ec of the band cords 16 in the crown region to the ends Em of the band cords 16 in each middle region Mi is preferably equal to or more than 10, more preferably equal to or more than 15, but preferably equal to or less than 55, more preferably equal to or less than 50. Such an arrangement of the carcass cords 13 and the band cord 16 can improve wear resistance, grip performance and turning performance in a well-balanced manner while maintaining steering stability in a turning condition where the camber angle is relatively small.

From a similar point of view, a value $\theta s * Es/Em$ obtained by multiplying the angle $\theta s$ (shown in FIG. 3) of the carcass cords 13 in each shoulder region Sh by a ratio of the ends Es of the band cords 16 in each shoulder region Sh to the ends Em of the band cords 16 in each middle region Mi is preferably equal to or more than 10, more preferably equal to or more than 15, but preferably equal to or less than 55, more preferably equal to or less than 50. Such an arrangement of the carcass cords 13 and the band cord 16 can improve wear resistance, grip performance and turning performance in a well-balanced manner while maintaining steering stability in a turning condition with a relatively large camber angle.

While the motorcycle tyre of an embodiment of the present invention has been described in detail above, the present invention is not limited to the above-mentioned specific embodiment, and can be embodied by modifying to various aspects within the scope of the appended claims.

[Example]

Motorcycle tyres (for front wheel tyre) with a nominal width of 120 mm, an aspect ratio of 70%, and a rim diameter of 17 inches, which have the basic structure of FIG. 1 were manufactured based on the specifications in Tables 1 to 4. In addition, as a comparative example, a tyre was prototyped in which the angle of the carcass cords with respect to the tyre circumferential direction was constant over the crown region, the middle regions and the shoulder regions. Note that the comparative example tyre is practically the same as the tyres of the examples, except for the above structure. Then, turning performance, grip performance, steering stability and wear resistance of each test tyre were tested. The common specifications and test methods of each test tyre are as follows.

Rim size: MT3.50
Tire inner pressure: 250 kPa
Test motorcycle displacement: 1000cc

Turning performance, grip performance and steering stability test:
The above test motorcycle ran a test course on a dry asphalt road surface, and each performance was evaluated. "Turning performance" refers to the overall turning performance from upright to full bank. "Grip performance" refers to the overall grip performance over the entire driving range. "Steering stability" refers to overall steering stability, including handling performance over the entire driving range. The test results are shown with a maximum score of 10 points, and the larger the value, the better each evaluation performance.

Wear resistance test:

After traveling 15,000 km on a general road with the above test motorcycle, the remaining amount of tread rubber was measured. The test results are shown an index with the remaining amount of the comparative example as 100, and the larger the value, the more the remaining amount of tread rubber, more excellent wear resistance.

The test results are shown in Tables 1 to 4.

[Table 1]

| | Ref. | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Angle θc of carcass cords in Cr region (deg.) | 38 | 30 | 29 | 32 | 42 | 20 | 20 | 57 | 25 |
| Angle θm of carcass cords in Mi regions (deg.) | 38 | 42 | 35 | 44 | 43 | 39 | 21 | 60 | 26 |
| Angle θs of carcass cords in Sh regions (deg.) | 38 | 53 | 40 | 45 | 45 | 59 | 22 | 65 | 27 |
| Ends Ec of band cords in Cr region (ends/5cm) | 39 | 31 | 19 | 30 | 31 | 32 | 15 | 39 | 12 |
| Ends Em of band cords in Mi regions (ends/5cm) | 36 | 36 | 56 | 57 | 36 | 44 | 36 | 40 | 31 |
| Ends Es of band cords in Sh regions (ends/5cm) | 40 | 32 | 40 | 12 | 29 | 7 | 32 | 39 | 10 |
| θc / θs | 1 | 0.57 | 0.73 | 0.71 | 0.93 | 0.34 | 0.91 | 0.88 | 0.93 |
| Ec / Em | 1.08 | 0.86 | 0.34 | 0.53 | 0.86 | 0.73 | 0.42 | 0.98 | 0.39 |
| Es / Em | 1.11 | 0.89 | 0.71 | 0.21 | 0.81 | 0.16 | 0.89 | 0.98 | 0.32 |
| θc * Ec / Em | 41.2 | 25.8 | 9.8 | 16.8 | 36.2 | 14.5 | 8.3 | 55.6 | 9.7 |
| θs * Es / Em | 42.2 | 47.1 | 28.6 | 9.5 | 36.3 | 9.4 | 19.6 | 63.4 | 8.7 |
| Turning performance (score) | 4.0 | 8.5 | 7.0 | 7.0 | 6.0 | 8.0 | 6.0 | 7.5 | 6.0 |
| Grip performance (score) | 4.0 | 8.5 | 7.5 | 7.0 | 8.0 | 7.0 | 7.5 | 6.5 | 6.5 |
| Steering stability (score) | 4.5 | 8.0 | 7.0 | 7.5 | 7.0 | 6.0 | 8.0 | 7.0 | 7.5 |
| Wear resistance (index) | 100 | 120 | 115 | 115 | 120 | 115 | 115 | 110 | 110 |

[Table 2]

| | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|
| Angle θc of carcass cords in Cr region (deg.) | 19 | 28 | 40 | 47 | 30 | 30 | 30 | 30 | 30 |
| Angle θm of carcass cords in Mi regions (deg.) | 36 | 40 | 46 | 50 | 42 | 42 | 42 | 42 | 42 |
| Angle θs of carcass cords in Sh regions (deg.) | 53 | 53 | 53 | 53 | 53 | 53 | 53 | 53 | 53 |
| Ends Ec of band cords in Cr region (ends/5cm) | 31 | 31 | 31 | 31 | 16 | 18 | 23 | 28 | 34 |
| Ends Em of band cords in Mi regions (ends/5cm) | 36 | 36 | 36 | 36 | 36 | 36 | 36 | 36 | 36 |

(continued)

| | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|
| Ends Es of band cords in Sh regions (ends/5cm) | 32 | 32 | 32 | 32 | 32 | 32 | 32 | 32 | 32 |
| θc / θs | 0.36 | 0.53 | 0.75 | 0.89 | 0.57 | 0.57 | 0.57 | 0.57 | 0.57 |
| Ec / Em | 0.86 | 0.86 | 0.86 | 0.86 | 0.44 | 0.5 | 0.64 | 0.78 | 0.94 |
| Es / Em | 0.89 | 0.89 | 0.89 | 0.89 | 0.89 | 0.89 | 0.89 | 0.89 | 0.89 |
| θc* Ec / Em | 16.4 | 24.1 | 34.4 | 40.5 | 13.3 | 15 | 19.2 | 23.3 | 28.3 |
| θs * Es / Em | 47.1 | 47.1 | 47.1 | 47.1 | 47.1 | 47.1 | 47.1 | 47.1 | 47.1 |
| Turning performance (score) | 7.5 | 8.5 | 7.5 | 7.0 | 6.5 | 7.0 | 7.5 | 7.5 | 7.5 |
| Grip performance (score) | 8.5 | 8.5 | 8.5 | 8.0 | 7.0 | 8.0 | 8.5 | 8.5 | 7.0 |
| Steering stability (score) | 8.0 | 8.0 | 8.0 | 7.5 | 6.5 | 7.5 | 8.0 | 8.0 | 6.5 |
| Wear resistance (index) | 110 | 120 | 120 | 120 | 110 | 115 | 120 | 120 | 115 |

[Table 3]

| | Ex. 18 | Ex. 19 | Ex. 20 | Ex. 21 | Ex. 22 | Ex. 23 | Ex. 24 | Ex. 25 | Ex. 26 |
|---|---|---|---|---|---|---|---|---|---|
| Angle θc of carcass cords in Cr region (deg.) | 30 | 30 | 30 | 30 | 30 | 20 | 30 | 40 | 60 |
| Angle θm of carcass cords in Mi regions (deg.) | 42 | 42 | 42 | 42 | 42 | 42 | 42 | 42 | 62 |
| Angle θs of carcass cords in Sh regions (deg.) | 53 | 53 | 53 | 53 | 53 | 53 | 53 | 53 | 64 |
| Ends Ec of band cords in Cr region (ends/5cm) | 31 | 31 | 31 | 31 | 31 | 18 | 30 | 32 | 33 |
| Ends Em of band cords in Mi regions (ends/5cm) | 36 | 36 | 36 | 36 | 36 | 36 | 36 | 36 | 36 |
| Ends Es of band cords in Sh regions (ends/5cm) | 16 | 18 | 23 | 28 | 34 | 32 | 32 | 32 | 32 |
| θc / θs | 0.57 | 0.57 | 0.57 | 0.57 | 0.57 | 0.38 | 0.57 | 0.75 | 0.94 |
| Ec / Em | 0.86 | 0.86 | 0.86 | 0.86 | 0.86 | 0.5 | 0.83 | 0.89 | 0.92 |
| Es / Em | 0.44 | 0.5 | 0.64 | 0.78 | 0.94 | 0.89 | 0.89 | 0.89 | 0.89 |
| θc * Ec / Em | 25.8 | 25.8 | 25.8 | 25.8 | 25.8 | 10 | 25 | 35.6 | 55 |
| θs * Es / Em | 23.6 | 26.5 | 33.9 | 41.2 | 50.1 | 47.1 | 47.1 | 47.1 | 56.9 |
| Turning performance (score) | 8.0 | 8.0 | 8.5 | 8.5 | 8.0 | 7.5 | 8.0 | 8.0 | 7.0 |

7

(continued)

| | Ex. 18 | Ex. 19 | Ex. 20 | Ex. 21 | Ex. 22 | Ex. 23 | Ex. 24 | Ex. 25 | Ex. 26 |
|---|---|---|---|---|---|---|---|---|---|
| Grip performance (score) | 7.0 | 8.0 | 8.5 | 8.5 | 8.0 | 7.5 | 8.0 | 8.0 | 7.0 |
| Steering stability (score) | 7.0 | 7.5 | 7.5 | 7.5 | 7.0 | 7.0 | 7.5 | 7.5 | 6.5 |
| Wear resistance (index) | 110 | 120 | 120 | 120 | 110 | 110 | 120 | 120 | 110 |

[Table 4]

| | Ex. 27 | Ex. 28 | Ex. 29 | Ex. 30 |
|---|---|---|---|---|
| Angle $\theta c$ of carcass cords in Cr region (deg.) | 30 | 30 | 30 | 30 |
| Angle $\theta m$ of carcass cords in Mi regions (deg.) | 35 | 42 | 42 | 42 |
| Angle $\theta s$ of carcass cords in Sh regions (deg.) | 40 | 40 | 55 | 60 |
| Ends Ec of band cords in Cr region (ends/5cm) | 31 | 31 | 31 | 31 |
| Ends Em of band cords in Mi regions (ends/5cm) | 36 | 36 | 36 | 36 |
| Ends Es of band cords in Sh regions (ends/5cm) | 10 | 30 | 30 | 33 |
| $\theta c$ / $\theta s$ | 0.75 | 0.75 | 0.55 | 0.5 |
| Ec / Em | 0.86 | 0.86 | 0.86 | 0.86 |
| Es / Em | 0.28 | 0.83 | 0.83 | 0.92 |
| $\theta c$ * Ec / Em | 25.8 | 25.8 | 25.8 | 25.8 |
| $\theta s$ * Es / Em | 11.1 | 33.3 | 45.8 | 55 |
| Turning performance (score) | 6.5 | 8.0 | 8.0 | 7.0 |
| Grip performance (score) | 6.5 | 8.0 | 8.0 | 7.0 |
| Steering stability (score) | 7.0 | 7.5 | 7.5 | 7.0 |
| Wear resistance (index) | 110 | 120 | 120 | 115 |

As a result of the test, it is confirmed that the tyres of the examples exhibit excellent turning performance. In addition, it is confirmed that the tyres of the examples also improve grip performance, steering stability and wear resistance.

**Claims**

**1.** A motorcycle tyre (1) comprising:

a tread portion (2) between a pair of tread edges;
a pair of sidewall portions (3);
a pair of bead portions (4); and
a carcass (6) having a bias structure and extending between the pair of bead portions (4), wherein
the tread portion (2), when a tread development width (TWe) between the pair of tread edges (Te) of the tread portion (2) is equally divided into five regions, comprises a central crown region (Cr), a pair of shoulder regions (Sh) including the pair of tread edges (Te) and a pair of middle regions (Mi) located between the crown region (Cr) and each of the shoulder regions (Sh), and
the carcass (6) comprises a plurality of carcass cords (13), and
an angle $\theta s$ with respect to a tyre circumferential direction of at least one of the plurality of carcass cords (13) in the shoulder regions (Sh) is greater than an angle $\theta c$ with respect to the tyre circumferential direction of at least one of the plurality of carcass cords (13) in the crown region (Cr),
**characterized in that**

the tread portion (2) is provided with a band layer (8) extending in the crown region (Cr), the pair of middle regions (Mi) and the pair of shoulder regions (Sh),

the band layer (8) comprises a band ply (15) having band cords (16) oriented at an angle equal to or less than 5 degrees with respect to the tyre circumferential direction,

ends Em of the band cords (16) in the middle regions (Mi) is greater than ends Ec of the band cords (16) in the crown region (Cr), and

ends Es of the band cords (16) of the band ply (15) in each of the pair of shoulder regions (Sh) are smaller than the ends Em.

2. The motorcycle tyre (1) according to claim 1, wherein
in the crown region (Cr), the pair of middle regions (Mi) and the pair of shoulder regions (Sh), an angle with respect to the tyre circumferential direction of the plurality of carcass cords (13) is in a range of 20 to 65 degrees.

3. The motorcycle tyre (1) according to claim 1 or 2, wherein
the angle θc is in a range of 0.35 to 0.90 times of the angle θs.

4. The motorcycle tyre (1) according to any one of claims 1 to 3, wherein
the ends Ec are in a range of from 0.50 to 0.90 times of the ends Em.

5. The motorcycle tyre (1) according to any one of claims 1 to 4, wherein
the ends Es are in a range of from 0.50 to 0.90 times of the ends Em.

6. The motorcycle tyre (1) according to any one of claims 1 to 5, wherein
a value θc*Ec/Em obtained by multiplying the angle θc by a ratio of the ends Ec to the ends Em is in a range of 10 to 55.

7. The motorcycle tyre (1) according to any one of claims 1 to 6, wherein
a value θs*Es/Em obtained by multiplying the angle θs by a ratio of ends Es of the band cords (16) of the band ply (15) in each of the pair of shoulder regions (Sh) to the ends Em is in a range of 10 to 55.

8. The motorcycle tyre (1) according to any one of claims 1 to 7, wherein
the band ply (8) comprises a jointless band ply having the band cords wound spirally.

**Patentansprüche**

1. Motorradreifen (1), umfassend:

einen Laufflächenabschnitt (2) zwischen einem Paar Laufflächenkanten;
ein Paar Seitenwandabschnitte (3);
ein Paar Wulstabschnitte (4); und
eine Karkasse (6), die eine Diagonalstruktur aufweist und sich zwischen dem Paar Wulstabschnitten (4) erstreckt, wobei
der Laufflächenabschnitt (2), wenn eine Laufflächenabwicklungsbreite (TWe) zwischen dem Paar Laufflächenkanten (Te) des Laufflächenabschnitts (2) gleichmäßig in fünf Bereiche unterteilt ist, einen zentralen Kronenbereich (Cr), ein Paar Schulterbereiche (Sh), die das Paar Laufflächenkanten (Te) einschließen, und ein Paar mittlere Bereiche (Mi), die sich zwischen dem Kronenbereich (Cr) und jedem der Schulterbereiche (Sh) befinden, umfasst, und
die Karkasse (6) eine Vielzahl von Karkasskorden (13) umfasst, und
ein Winkel θs in Bezug auf eine Reifenumfangsrichtung von mindestens einem der Vielzahl von Karkasskorden (13) in den Schulterbereichen (Sh) größer ist als ein Winkel θc in Bezug auf die Reifenumfangsrichtung von mindestens einem der Vielzahl von Karkasskorden (13) in dem Kronenbereich (Cr),
**dadurch gekennzeichnet, dass**
der Laufflächenabschnitt (2) mit einer Bandschicht (8) versehen ist, die sich in dem Kronenbereich (Cr), dem Paar mittleren Bereichen (Mi) und dem Paar Schulterbereichen (Sh) erstreckt,
die Bandschicht (8) eine Bandlage (15) umfasst, die Bandkorde (16) aufweist, die in einem Winkel gleich oder kleiner als 5 Grad in Bezug auf die Reifenumfangsrichtung ausgerichtet sind,
Enden Em der Bandkorde (16) in den mittleren Bereichen (Mi) größer sind als Enden Ec der Bandkorde (16) in dem Kronenbereich (Cr), und

Enden Es der Bandkorde (16) der Bandlage (15) in jedem des Paars Schulterbereiche (Sh) kleiner sind als die Enden Em.

2.  Motorradreifen (1) nach Anspruch 1, wobei
    in dem Kronenbereich (Cr), dem Paar mittleren Bereichen (Mi) und dem Paar Schulterbereichen (Sh) ein Winkel in Bezug auf die Reifenumfangsrichtung der Vielzahl von Karkasskorden (13) in einem Bereich von 20 bis 65 Grad liegt.

3.  Motorradreifen (1) nach Anspruch 1 oder 2, wobei
    der Winkel θc in einem Bereich des 0,35- bis 0,90-fachen des Winkels θs liegt.

4.  Motorradreifen (1) nach einem der Ansprüche 1 bis 3, wobei
    die Enden Ec in einem Bereich des 0,50- bis 0,90-fachen der Enden Em liegen.

5.  Motorradreifen (1) nach einem der Ansprüche 1 bis 4, wobei
    die Enden Es in einem Bereich des 0,50- bis 0,90-fachen der Enden Em liegen.

6.  Motorradreifen (1) nach einem der Ansprüche 1 bis 5, wobei
    ein Wert θc*Ec/Em, der durch Multiplizieren des Winkels θc mit einem Verhältnis der Enden Ec zu den Enden Em erhalten wird, in einem Bereich von 10 bis 55 liegt.

7.  Motorradreifen (1) nach einem der Ansprüche 1 bis 6, wobei
    ein Wert θs*Es/Em, der durch Multiplizieren des Winkels θs mit einem Verhältnis der Enden Es der Bandkorde (16) der Bandlage (15) in jedem des Paars Schulterbereiche (Sh) zu den Enden Em erhalten wird, in einem Bereich von 10 bis 55 liegt.

8.  Motorradreifen (1) nach einem der Ansprüche 1 bis 7, wobei
    die Bandlage (8) eine fugenlose Bandlage umfasst, deren Bandkorde spiralförmig gewickelt sind.

**Revendications**

1.  Pneumatique pour motocyclette (1) comprenant :

    une portion formant bande de roulement (2) entre une paire de bords de bande de roulement ;
    une paire de portions formant parois latérales (3) ;
    une paire de portions de talon (4) ; et
    une carcasse (6) ayant une structure diagonale et s'étendant entre la paire de portions de talon (4), dans lequel
    la portion formant bande de roulement (2), quand une largeur de développement de bande de roulement (TWe) entre la paire de bords de bande de roulement (Te) de la portion formant bande de roulement (2) est divisée également en cinq régions, comprend une région de couronne centrale (Cr) , une paire de régions d'épaulement (Sh) incluant la paire de bords de bande de roulement (T) et une paire de régions médianes (Mi) situées entre la région de couronne (Cr) et chacune des régions d'épaulement (Sh), et
    la carcasse (6) comprend une pluralité de câblés de carcasse (13), et
    un angle θs par rapport à une direction circonférentielle du pneumatique de l'un au moins de la pluralité de câblés de carcasse (13) dans les régions d'épaulement (Sh) est plus grand qu'un angle θc par rapport à la direction circonférentielle du pneumatique de l'un au moins de la pluralité de câblés de carcasse (13) dans la région de couronne (Cr),
    **caractérisé en ce que**
    la portion formant bande de roulement (2) est dotée d'une couche de bande (8) s'étendant dans la région de couronne (Cr), la paire de régions médianes (Mi) et la paire de régions d'épaulement (Sh),
    la couche de bande (8) comprend une nappe de bande (15) ayant des câblés de bande (16) orientés sous un angle égal ou inférieur à 5 degrés par rapport à la direction circonférentielle du pneumatique,
    des extrémités Em des câblés de bande (16) dans les régions médianes (Mi) sont plus grandes que des extrémités Ec des câblés de bande (16) dans la région de couronne (Cr), et
    des extrémités Es des câblés de bande (16) de la nappe de bande (15) dans chacune de la paire de régions d'épaulement (Sh) sont plus petites que les extrémités Em.

2.  Pneumatique pour motocyclette (1) selon la revendication 1, dans lequel dans la région de couronne (Cr), la paire de régions médianes (Mi) et la paire de régions d'épaulement (Sh), un angle par rapport à la direction circonférentielle du pneumatique de la pluralité de câblés de carcasse (13) est dans une plage de 20 à 65 degrés.

3. Pneumatique pour motocyclette (1) selon la revendication 1 ou 2, dans lequel l'angle $\theta$c est dans une plage de 0,35 à 0,90 fois l'angle $\theta$s.

4. Pneumatique pour motocyclette (1) selon l'une quelconque des revendications 1 à 3, dans lequel les extrémités Ec sont dans une plage allant de 0,50 à 0,90 fois les extrémités Em.

5. Pneumatique pour motocyclette (1) selon l'une quelconque des revendications 1 à 4, dans lequel les extrémités Es sont dans une plage allant de 0,50 à 0,90 fois les extrémités Em.

6. Pneumatique pour motocyclette (1) selon l'une quelconque des revendications 1 à 5, dans lequel une valeur $\theta$c*Ec/Em obtenue en multipliant l'angle $\theta$c par un rapport des extrémités Ec sur les extrémités Em est dans une plage de 10 à 55.

7. Pneumatique pour motocyclette (1) selon l'une quelconque des revendications 1 à 6, dans lequel une valeur $\theta$s*Es/Em obtenue en multipliant l'angle $\theta$s par un rapport des extrémités Es des câblés de bande (16) de la nappe de bande (15) dans chacune de la paire de régions d'épaulement (Sh) sur les extrémités Em est dans une plage de 10 à 55.

8. Pneumatique pour motocyclette (1) selon l'une quelconque des revendications 1 à 7, dans lequel la nappe de bande (8) comprend une nappe de bande sans joints ayant des câblés de bande enroulés en spirale.

# Fig.1

# Fig.2

# Fig.3

# Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021010530 A
- JP 2000185511 A
- GB 1423669 A
- CN 1652950 A
- US 2020331298 A1
- IT MI961614 A1